# EUROPEAN PATENT APPLICATION

(11) **EP 1 511 147 A2**
(43) Date of publication of application: **02.03.2005**
(21) Application number: 04018236.2
(22) Date of filing: 02.08.2004
(51) Int. Cl.: H02H 3/093

(54) **Circuit breaker and trip unit employing multiple function time selector switch**

(30) Priority: 29.08.2003 US 651556
(71) Applicant: EATON CORPORATION, Cleveland, Ohio 44114-2584 (US)
(72) Inventor: Carlino, Harry J., Export, PA 15632 Westmoreland (US); Shaak, Todd M., Presto, PA 15142 Allegheny (US); Saletta, Gary F., Irwin, PA 14642 Westmoreland (US); Puskar, Michael P., Carnegie, PA 15106 Allegheny (US)
(74) Representative: Wagner, Karl H., Dipl.-Ing.

(57) **Abstract**

A trip unit for a circuit breaker for an electrical circuit includes a current transformer adapted to sense a current flowing in the electrical circuit and to provide a signal representative of the current. A microprocessor includes a memory, a rotary selector switch, and a routine evaluating the sensed current with respect to a plurality of predetermined current/time conditions, such as long delay protection, override protection, short delay protection and/or ground fault protection, and responsively generating a trip signal. The rotary selector switch has a plurality of positions. Each of the positions selects a first time value, such as a short delay time for a first one of the predetermined current/time conditions, and selects a second time value, such as a ground fault time, for a different second one of the predetermined current/time conditions.

## Description

### BACKGROUND OF THE INVENTION

### Field of the Invention

The invention relates to circuit breakers including a trip unit, and more specifically, to circuit breaker trip units including plural current/time protection functions.

### Background Information

Circuit breakers and, in particular, circuit breakers of the molded case variety, are well known in the art. See, for example, U.S. Patent No. 5,341,191.

Circuit breakers are used to protect electrical circuitry from damage due to an overcurrent condition, such as an overload condition or a relatively high level short circuit or fault condition. Molded case circuit breakers typically include a pair of separable contacts per phase. The separable contacts may be operated either manually by way of a handle disposed on the outside of the case or automatically in response to an overcurrent condition. Typically, such circuit breakers include an operating mechanism, which is designed to rapidly open and close the separable contacts, and a trip unit, which senses overcurrent conditions in an automatic mode of operation. Upon sensing an overcurrent condition, the trip unit trips the operating mechanism to a trip state, which moves the separable contacts to their open position.

Industrial circuit breakers often use a circuit breaker frame, which houses a trip unit. See, for example, U.S. Patent Nos. 5,910,760; and 6,144,271. The trip unit may be modular and may be replaced, in order to alter the electrical properties of the circuit breaker.

It is well known to employ trip units which utilize a microprocessor to detect various types of overcurrent trip conditions and to provide various protection functions, such as, for example, a long delay trip, a short delay trip, an instantaneous trip, and/or a ground fault trip. The long delay trip function protects the load served by the protected electrical system from overloads and/or overcurrents. The short delay trip function can be used to coordinate tripping of downstream circuit breakers in a hierarchy of circuit breakers. The instantaneous trip function protects the electrical conductors to which the circuit breaker is connected from damaging overcurrent conditions, such as short circuits. As implied, the ground fault trip function protects the electrical system from faults to ground.

The earliest electronic trip unit circuit designs utilized discrete components such as transistors, resistors and capacitors.

More recently, designs, such as disclosed in U.S. Patent Nos. 4,428,022; and 5,525,985, have included microprocessors, which provide improved performance and flexibility. These digital systems sample the current waveforms periodically to generate a digital representation of the current. The microprocessor uses the samples to execute algorithms, which implement one or more current protection curves.

Each circuit breaker is designed for a specific maximum continuous current. This current rating may be set by a suitable selection mechanism, such as by a rotary switch or by selection of a resistor (e.g., a "rating plug") which converts a current to a voltage for use by the trip unit. In some instances, a single circuit breaker frame may be easily adapted for installations which call for a range of maximum continuous currents, up to the design limits of the frame, through use of the selection mechanism by which the current rating of the device can be established. Typically, the pick-up currents for the various protection functions have been selectable multiples or fractions of this current rating. Thus, instantaneous protection trips the device any time the current reaches a selected multiple of the rated current, such as, for example, ten times the rated current. Pick-up for short delay protection is a lesser multiple of the rated current, while pick-up current for long delay protection may be a fraction of the rated current.

Typically, the short delay trip is only generated when the short delay pick-up current is exceeded for a short delay time interval, although, in some applications, an inverse time function is also used for short delay protection.

If the current/time characteristic of a circuit interrupter is plotted on a logarithmic scale with current on the abscissa and time on the ordinate, then the pick-up currents appear as vertical line segments, and the I²t characteristic (wherein "I" is the value of current and "t" is the time-to-trip) of the long delay, and if used for the short delay, appear as straight diagonal lines.

Typically, switches set the parameters of the various protection functions. See, for example, U.S. Patent Nos. 4,752,853; and 5,367,427.

U.S. Patent No. 5,490,086 discloses a circuit breaker including an electronic trip unit having a plurality of limit set inputs, such as rotary switches or potentiometers, which allow corresponding variables, such as long time delay, short time pick-up, short time delay and instantaneous pick-up to be adjusted. The trip unit also has a ground fault monitor module. A ground fault pick-up is divided into three levels: "Lo", which is defined as 20 percent of frame rating; "Hi", which is defined as the frame rating or 1200 amps, whichever is less; and "Med", which is defined as the average of "Lo" and "Hi". A ground fault delay is divided into three fixed times: 0.1, 0.3 and 0.5 seconds. An additional monitoring option has a 1200 amp pick-up and a 0.5 second delay. A rotary switch of the ground fault monitor module has ten positions. The switch is read by program code in an EPROM to determine the user selected ground fault pick-up and delay options. The user selects a Lo, Med or Hi ground fault pick-up level, by way of the rotary switch, when selecting the ground fault delay. The tenth position (MAX) indicates that the user has selected the 1200 amp pick-up and a 0.5 second delay.

Known prior trip units employ individual selector switches for various individual time functions. For example, one rotary switch is employed to select the short delay time, and another rotary switch is employed to select the ground fault time.

There is a need, therefore, for a circuit breaker having a trip unit that may be more readily configured to provide various trip functions.

There is also the need for a circuit breaker and a circuit breaker trip unit that reduce manufacturing cost.

There is room for improvement in circuit breakers and in circuit breaker trip units.

### SUMMARY OF THE INVENTION

These needs and others are met by the present invention which provides a trip unit selector switch having a plurality of positions. Each of those positions selects a first time value for a first predetermined current/time condition and, also, selects a second time value for a different second predetermined current/time condition.

As one aspect of the invention, a trip unit for a circuit interrupter for an electrical circuit comprises: a sensor adapted to sense a current flowing in the electrical circuit and to provide a signal representative of the current; and a processor comprising a memory, a selector switch, and a routine evaluating the sensed current with respect to a plurality of predetermined current/time conditions and responsively generating a trip signal, the selector switch having a plurality of positions, with each of the positions selecting a first time value for a first one of the predetermined current/time conditions and selecting a second time value for a different second one of the predetermined current/time conditions.

The trip unit may include a plurality of styles, with one of the styles including both the first one of the predetermined current/time conditions and the different second one of the predetermined current/time conditions. The memory of the processor may include a configuration value. The routine of the processor may read the configuration value from the memory and responsively select a corresponding one of the styles of the trip unit.

The trip unit may include a plurality of styles, with one of the styles including both the first one of the predetermined current/time conditions and the different second one of the predetermined current/time conditions. The memory of the processor may be preconfigured to include one of the styles of the trip unit.

A count of the plurality of styles of the trip unit may be four, with a first one of the styles including both the first one of the predetermined current/time conditions and the different second one of the predetermined current/time conditions, with a second one of the styles including the first one of the predetermined current/time conditions, with a third one of the styles including the different second one of the predetermined current/time conditions, and with a fourth one of the styles including none of the first one of the predetermined current/time conditions and none of the different second one of the predetermined current/time conditions.

The routine may ignore the selector switch for the fourth one of the styles, which includes none of the first one of the predetermined current/time conditions and none of the different second one of the predetermined current/time conditions.

The first one of the predetermined current/time conditions may be a short delay protection function, and the different second one of the predetermined current/time conditions may be a ground fault protection function. The first time value may be selected by the selector switch from a first plurality of short delay times. The second time value may be selected by the selector switch from a second plurality of ground fault times.

As another aspect of the invention, a circuit breaker for an electrical circuit comprises: at least one set of separable contacts; an operating mechanism for moving the separable contacts between an open position and a closed position; and a trip unit comprising: a sensor adapted to sense a current flowing in the electrical circuit and to provide a signal representative of the current, and a processor comprising a memory, a selector switch, and a routine evaluating the sensed current with respect to a plurality of predetermined current/time conditions and responsively generating a trip signal, the selector switch having a plurality of positions, with each of the positions selecting a first time value for a first one of the predetermined current/time conditions and selecting a second time value for a different second one of the predetermined current/time conditions.

As another aspect of the invention, a method of selecting a plurality of time values for a trip unit comprises: employing a trip unit including a plurality of predetermined current/time conditions; employing a first time value for a first one of the predetermined current/time conditions; employing a second time value for a different second one of the predetermined current/time conditions; and employing a single selector switch having a plurality of positions, with each of the positions electing the first time value and selecting the second time value.

The method may further comprise employing the trip unit including a plurality of styles; employing one of the styles including both the first one of the predetermined current/time conditions and the different second one of the predetermined current/time conditions; configuring a memory to include a configuration value representing a corresponding one of the styles of the trip unit; and reading the configuration value from the memory and responsively selecting the corresponding one of the styles of the trip unit.

The method may comprise employing the trip unit including a plurality of styles; employing one of the styles including both the first one of the predetermined current/time conditions and the different second one of the predetermined current/time conditions; configuring a memory to include only one of the styles of the trip unit; and employing the only one of the styles including both the first one of the predetermined current/time conditions and the different second one of the predetermined current/time conditions.

The method may comprise employing at least one of short delay protection and ground fault protection; employing with the short delay protection a short delay time which is selected by the single selector switch from the group comprising a first time, a second time and a third time; employing with the ground fault protection a ground fault time which is selected by the single selector switch from the group comprising a fourth time, a fifth time and a sixth time; and employing the single selector switch having nine positions which correspond to the first time and the fourth time, the first time and the fifth time, the first time and the sixth time, the second time and the fourth time, the second time and the fifth time, the second time and the sixth time, the third time and the fourth time, the third time and the fifth time, and the third time and the sixth time.

### BRIEF DESCRIPTION OF THE DRAWINGS

A full understanding of the invention can be gained from the following description of the preferred embodiments when read in conjunction with the accompanying drawings in which:
Figure 1 is a schematic diagram in block form of a circuit interrupter in accordance with the invention shown connected to an electrical system.
Figure 2 is a logarithmic plot of the current/time characteristics of a circuit breaker.
Figures 3A-3D are plan views of user selector switches and various switch settings for four different trip unit styles in accordance with embodiments of the invention.
Figure 4 is a flowchart of a subroutine, which is employed by the microprocessor to read the selector switches of Figure 1.
Figure 5 is an exploded isometric view of a circuit breaker and a modular circuit breaker trip unit of the style of Figure 3A.

### DESCRIPTION OF THE PREFERRED EMBODIMENTS

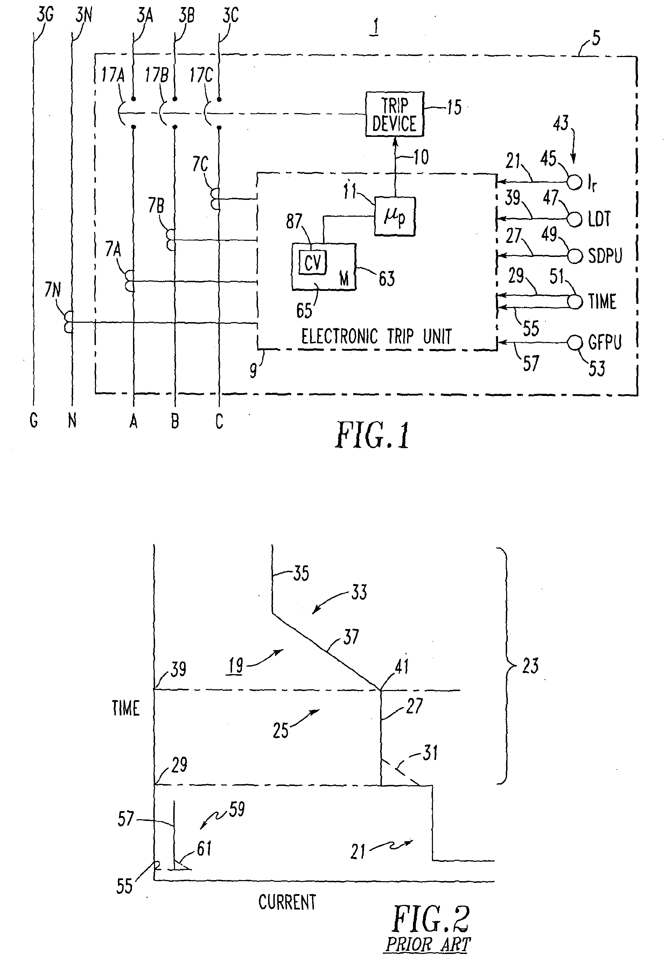

Figure 1 shows a circuit interrupter for protection of an electrical system 1, which includes three phase (e.g., A, B and C) electrical circuit conductors 3A, 3B and 3C, and which may also include a neutral (N) conductor 3N and a ground (G) conductor 3G. The exemplary circuit interrupter is a microprocessor-based circuit breaker 5. The circuit breaker 5 includes current transformers 7A, 7B, 7C, and 7N, which generate signals representative of the currents flowing in the respective phase conductors 3A, 3B and 3C, and in the neutral conductor 3N if desired. An electronic trip unit 9 monitors the currents sensed by these current transformers and generates a trip signal 10 in response to predetermined current/time conditions. The electronic trip unit 9 incorporates a microprocessor (µP) 11. The microprocessor-based electronic trip unit 9 may be of the type disclosed in U.S. Patent Nos. 4,752,853; and 6,167,329, which are hereby incorporated herein by reference. The electronic trip unit 9 incorporates a resistor (not shown) that sets the maximum continuous current that will be permitted by the circuit breaker 5.

The electronic trip unit 9 generates the trip signal 10 in response to the specified overcurrent conditions. This trip signal 10 actuates a trip device 15, which opens sets of separable contacts 17A, 17B and 17C, to interrupt current through the corresponding phase conductors of the electrical system 1.

The circuit breaker 5 provides several conventional modes of protection of the types previously discussed. In particular, long delay and instantaneous protection are provided. Short delay and/or ground fault protection may also be provided. These various protection functions can be more fully understood by reference to Figure 2, which illustrates the current/time characteristic 19 of the electronic trip unit 9. This is a log-log plot with current (*e.g*., per unit) shown on the abscissa and time on the ordinate.

An override protection function is represented in Figure 2 by the first or lower portion 21 of the current/time characteristic 19. In addition, a programmable instantaneous trip function is provided by the short delay protection function with no intentional delay.

A second or upper portion 23 of the current/time characteristic 19 above the override portion 21 provides the time delayed trip functions. A first section 25 of this upper portion 23 of the current/time characteristic 19 provides the short delay trip function. The vertical line segment 27 is the short delay pick-up (SDPU). As can be seen from Figure 2, a current which exceeds the short delay pick-up current must persist for a period of time determined by the short delay time 29 before the circuit breaker 5 will trip. In some applications, an inverse time function is used for the short delay trip. This inverse time function for short delay protection is indicated by the dashed line 31. With such an inverse time function for the short delay it can be seen from Figure 2 that a current above the short delay pick-up current would have to persist for a longer period of time before the circuit breaker trips, but that at higher current levels the circuit breaker would trip sooner.

A second section 33 of the upper portion 23 of the current/time characteristic 19 provides the long delay protection. The long delay pick-up (LDPU) is represented by the vertical line segment 35. Commonly, the long delay trip function is provided with an inverse time function represented by the diagonal line segment 37. Typically, I²t inverse time functions are used for the long delay and, if used, the short delay trip functions. However, other inverse time functions such as It or I⁴t may be employed. These other inverse time functions would provide a different slope to the diagonal line segments 31 and 37.

The long delay time (LDT) 39 establishes the point 41 on the current/time characteristic 19. The current at point 41, which must persist for the long delay time 39, in order to generate the long delay trip may be, for example, six times the long delay pick-up current.

Referring again to Figure 1, a number of switches 43, including rotary switches 45,47,49,51,53, are employed for setting the parameters of the various trip functions of the circuit breaker 5. The switch 45 selects the rating (Iᵣ), where the long delay pick-up (LDPU) is typically about 115% (or 1.15 p.u.) of Iᵣ. The switch 47 selects the long delay time (LDT) 39, the switch 49 selects the short delay pick-up (SDPU) 27, the single switch (TIME) 51 selects both the short delay time (SDT) 29 and the ground fault time (GFT) 55, and the switch 53 selects the ground fault pick-up (GFPU) 57.

As shown in Figure 2, another current/time characteristic 59 describes the ground fault trip function. The vertical line segment 57 indicates the ground fault pick-up (GFPU). As can be seen from Figure 2, a current which exceeds the ground fault pick-up current must persist for a period of time determined by the ground fault time 55 before the circuit breaker 5 will trip. In some applications, an inverse time function is used for the ground fault trip. This inverse time function for ground fault protection is indicated by the dashed line 61.

Various combinations of protection functions can be provided by the circuit breaker 5, for example, long delay and instantaneous protection or long delay and short delay protection may be provided. Ground fault protection may or may not be included.

While the present invention is illustrated and described in conjunction with the circuit breaker 5 and trip unit 9 for a three-phase electrical system, the invention is not limited thereto and is applicable to other circuit breakers and trip units for use with single phase or polyphase electrical systems.

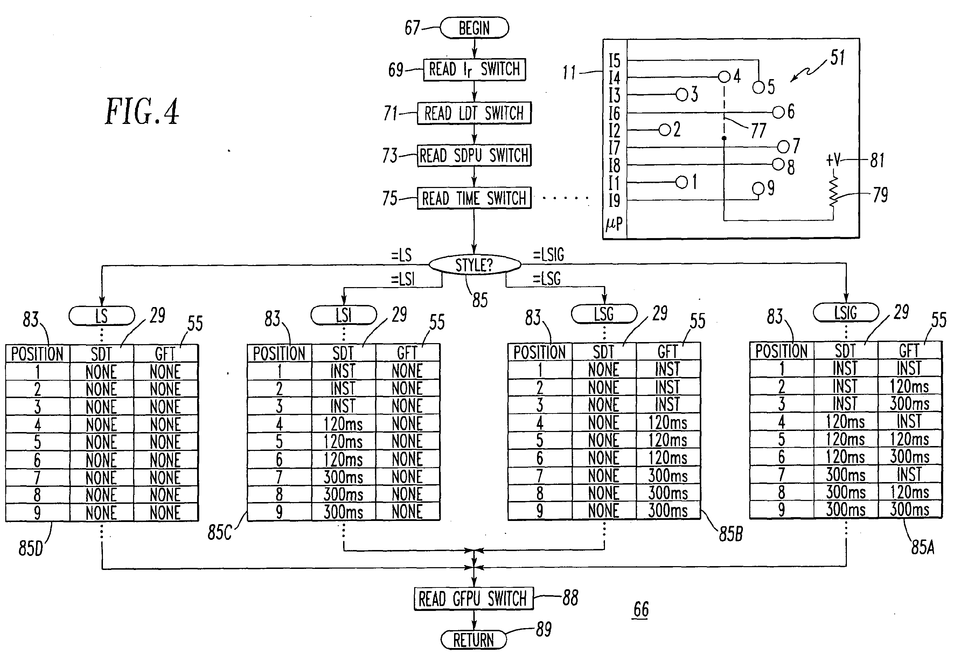

As is discussed below in connection with Figure 4, the trip unit 9 is preferably factory programmable via a configuration value (CV) 87 located in nonvolatile memory (M) 63.

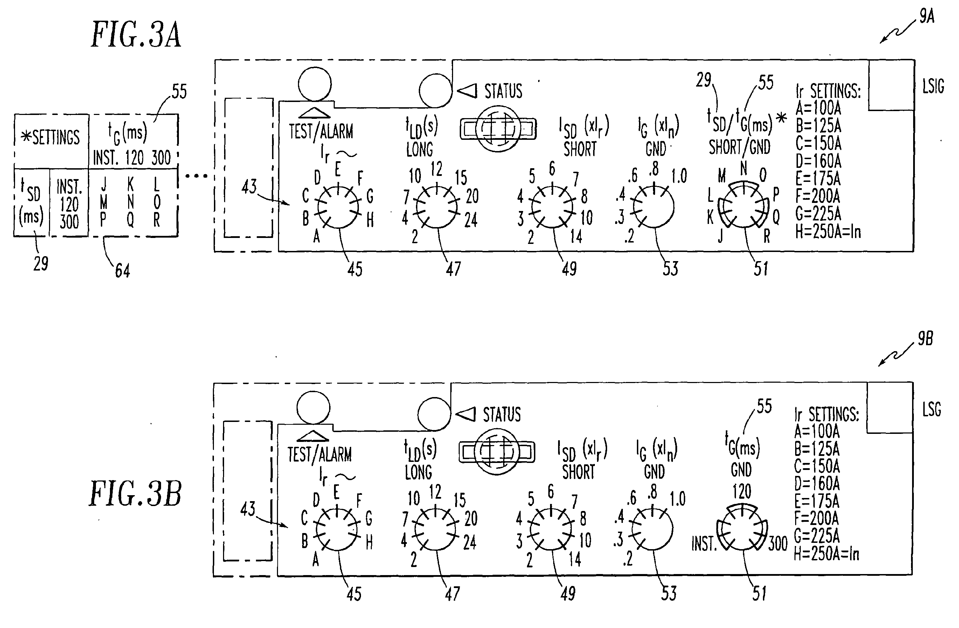

Referring to Figures 3A-3D, the user-interface portions of four trip unit product styles (*e.g*., LSIG style 9A; LSG style 9B; LSI style 9C; LS style 9D) are shown along with some or all of the corresponding selector switches 43 and the various switch settings for those styles. Although four styles 9A-9D are shown, the invention is applicable to a wide range of different trip unit styles (*e.g*., four; any suitable count).

The LSIG style 9A of Figure 3A employs plural (*e.g*., two) adjustable time settings (*e.g*., short delay time (SDT) 29 or t_{SD}; ground fault time (GFT) 55 or t_{G}) as provided by the single rotary selector switch (TIME) 51.

When configured as an LSG style 9B of Figure 3B, the selector switch 51 provides only a single time selection (GFT) 55 or t_{G}.

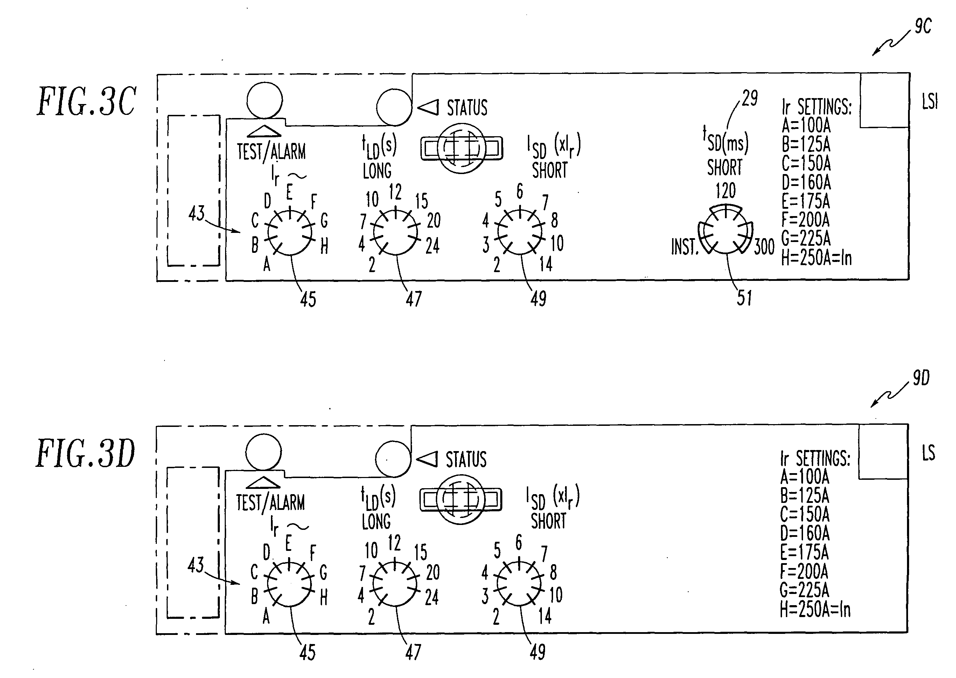

When configured as an LSI style 9C of Figure 3C, the same selector switch 51 provides only a single time selection (SDT) 29 or t_{SD}.

Finally, in the LS style 9D of Figure 3D, the selector switch 51 is not employed (e.g., thereby providing a space savings and, perhaps, a small cost savings) and is, thus, ignored.

Alternatively, in the event that the selector switch 51 is employed (e.g., thereby providing uniformity of design and manufacture between the various styles 9A-9D) (not shown), then it is simply ignored by the µP firmware in the memory (M) 63 of Figure 1.

The exemplary single selector switch 51, which is employed for zero, one or two time functions, saves space and cost.

The LS style 9D of Figure 3D does not have an adjustable short delay time (SDT) 29 and, instead, employs a short delay trip function with an I²t response. This style 9D also does not have ground fault protection. Hence, there is no adjustment for ground fault time (GFT) 55. Accordingly, the selector switch 51 is not accessible.

The LSI style 9C of Figure 3C does not have ground fault protection. Therefore, it does not have an adjustable ground fault time (GFT) 55. This style 9C does have an adjustable short delay time (SDT) 29. Hence, the selector switch 51 is only used to adjust the short delay time (SDT) 29 setting. The selector switch 51 is configured to use the same nine positions as the LSIG style 9A of Figure 3A, in order that the mechanical operation may remain constant. As shown by the label 64 of Figure 3A, the first three positions ("J", "K" and "L") of the selector switch 51 represent an instantaneous short delay time (*e.g.*, about 50 ms); the next three positions ("M", "N" and "O") represent a short delay time of about 120 ms; and the final three positions ("P", "Q" and "R") represent a short delay time of about 300 ms. Those same positions are employed in the style 9C of Figure 3C.

The LSG style 9B of Figure 3B does not have an adjustable short delay time and, instead, employs a short delay trip function with a fixed I²t response. This style 9B does have an adjustable ground fault time. The selector switch positions and settings are the same as the LSI style 9C of Figure 3C, although the time settings are for ground fault time 55 instead of the short delay time 29.

The LSIG style 9A of Figure 3A has both adjustable short delay time and adjustable ground fault time. Instead of having two selector switches (not shown) to provide these two different time adjustments, the two time adjustments are combined into the single selector switch 51. The first three positions ("J", "K" and "L") of the single selector switch 51 represent an instantaneous short delay time (*e.g*., about 50 ms), while the ground fault time changes from instantaneous (*e.g*., about 50 ms) to about 120 ms to about 300 ms. The next three positions ("M", "N" and "O") of the selector switch 51 represent a short delay time of about 120 ms, while the ground fault time once again changes from instantaneous (*e.g.*, about 50 ms) to about 120 ms to about 300 ms. The final three positions ("P", "Q" and "R") of the selector switch 51 represent a short delay time of about 300 ms, while the ground fault time changes from instantaneous (*e.g*., about 50 ms) to about 120 ms to about 300 ms. This provides three settings of short delay time 29 and three settings of ground fault time 55 in the single selector switch 51.

Figure 4 shows how the microprocessor 11 of Figure 1 differentiates the multiple selections of the single selector switch 51 based upon a programmed style. In Figure 1, a routine 65 evaluates the sensed current with respect to a plurality of predetermined current/time conditions (as shown in Figure 2) and responsively generates the trip signal 10. The single selector switch 51 has, for example, nine positions, with each of those positions selecting a first SDT value 29 of Figure 4 and a second GFT value 55. The routine 65 includes a switch read subroutine 66, which begins at 67, and reads the switch 45, at 69, in order to determine the rating (Iᵣ). Next, at 71, it reads the switch 47 to determine the long delay time (LDT) 39. Then, at 73, it reads the switch 49 to determine the short delay pick-up (SDPU) current. Next, at 75, the single switch (TIME) 51 is read. As shown in Figure 4, the rotary switch 51 includes nine positions ("1" through "9"), which are electrically connected to corresponding inputs ("I1" through "I9" of the microprocessor 11. The rotary arm 77 of the rotary switch 51 is electrically connected by a resistor 79 to a suitable positive voltage (+V) 81. Whenever the rotary arm 77 is positioned to one of the positions *(e.g.,* "4" in this example), the corresponding input (*e.g*., "I4" in this example) of the microprocessor 11 is set high or true. That particular input (*e.g*., "I4" in this example) corresponds to a position value (*e.g*., "4" in this example) 83, which is the same as the rotary switch position (*e.g.*, "4" in this example).

Next, at 85, it is determined which of the four trip unit product styles 9A-9D of Figures 3A-3D is employed (*e.g*., LSIG; LSG; LSI; LS) as previously discussed. Step 85 accesses table 85A for the LSIG style 9A, table 85B for the LSG style 9B, table 85C for the LSI style 9C and table 85D for the LS style 9D.

A suitable configuration value (CV) 87 *(e.g.,* "0", "1", "2", "3"; "00₂", "01₂, 10₂, "11₂") may be provided from any suitable input (not shown) (*e.g.*, a set of jumpers; a selector switch; a location, such as a byte, in configuration memory). Then, based upon that value 87, execution resumes with table 85A for the LSIG style 9A (*e.g*., for value "0") in which there are adjustments for both SDT 29 and GFT 55, table 85B for the LSG style 9B (*e.g*., for value "1") in which there is no adjustment for SDT 29, table 85C for the LSI style 9C (*e.g.*, for value "2") in which there is no adjustment for GFT 55, or table 85D for the LS style 9D (*e.g*., for value "3") in which there are no adjustments for SDT 29 and GFT 55. Hence, the µP memory 63 includes the configuration value 87, and the switch read subroutine 66, which reads that configuration value 87 from the memory 63 and responsively selects a corresponding one of the tables 85A-85D.

Although the configuration value (CV) 87 is disclosed, different µP firmware may, alternatively, be employed in the memory (M) 63 for each of the different styles 9A-9D. Thus, the µP memory 63 may be preconfigured to include one of the trip unit styles 9A-9D.

Each of the tables 85A,85B,85C,85D associates the position value 83 of step 75 with the selected short delay time (SDT) 29 and the selected ground fault time (GFT) 55. For example, regardless of the position value 83, table 85D does not employ any value for the SDT 29 and the GFT 55, since those times are not needed by the LS style 9D. Table 85C also does not employ any value for the GFT 55, since that time is not needed by the LSI style 9C. Table 85B also does not employ any value for the SDT 29, since that time is not needed by the LSG style 9B. Based upon the position value 83, table 85A determines the values for both the SDT 29 and the GFT 55 for the LSIG style 9A as shown in Figure 4. Similarly, table 85C employs the position value 83 to determine the SDT 29, and table 85B employs the position value 83 to determine the GFT 55.

After step 85, execution resumes at 88, where the microprocessor 11 reads the switch 53 to determine the ground fault pick-up (GFPU) current. Although two values are read by steps 73 and 88, for the styles 9B-9D that do not employ one or both of those values, the particular setting(s) are thereafter simply ignored. Finally, at 89, the subroutine 66 returns.

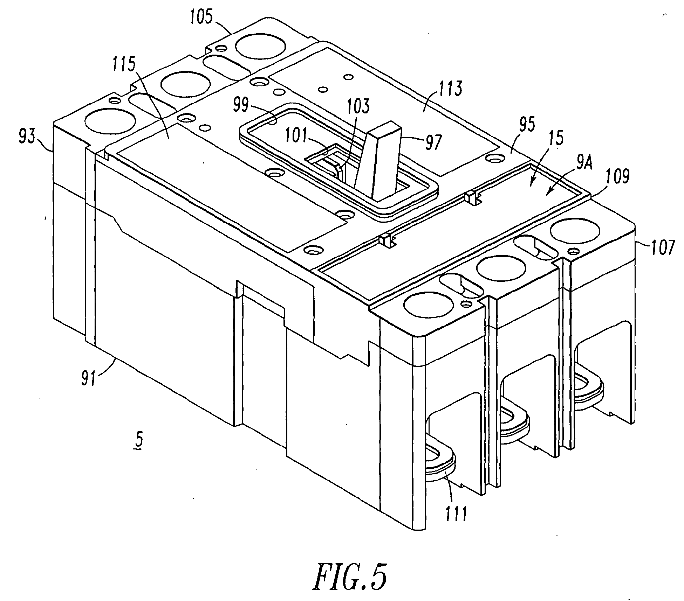

As shown in Figure 5, the molded case circuit breaker or interrupter 5 includes a main base 91 and a primary cover 93. Attached to the primary cover 93 is a secondary cover 95. An operating handle 97 extends through a secondary escutcheon 99 in the secondary cover 95 and an aligned primary escutcheon 101 in the primary cover 93. An operating mechanism 103 (*e.g*., which cooperates with the trip device 15 of Figure 1) is interconnected with the handle 97. The operating handle 97 moves the separable main contacts 17A,17B,17C of Figure 1 between open positions and closed positions. This circuit breaker 5 has a line end 105 and load end 107. The circuit breaker 5 includes a removable trip unit 109, which has the trip device 15 of Figure 1 and, for example, the trip unit style 9A of Figure 3A. Alternatively, any of the styles 9A-9D may be employed. There are also depicted a load terminal 111, a right side accessory region or pocket 113 and a left side accessory pocket or region 115.

Although a nine-position rotary selector switch 51 is disclosed, the invention is applicable to a wide range of suitable selector switches (*e.g*., a BCD switch; a DIP switch) having any suitable count of positions, with each of those positions selecting a first time value and selecting a second time value.

Although three time values (*e.g*., instantaneous, 120 ms, 300 ms) are disclosed for the SDT values and for the GFT values, the invention is applicable to a wide range of counts of time values and a wide range of time values for a wide range of current/time protection functions. For example, different counts of time values for each of the SDT and GFT values may be employed. Also, different time values for each of the SDT and GFT values may be employed.

Although a three-phase circuit breaker 5 and trip unit 9 are disclosed, the invention is applicable to other types of circuit breakers and trip units including those used in AC systems operating at various frequencies and having any number of phases (*e.g*., one, two, three or more); to larger or smaller circuit breakers, such as subminiature or commercial circuit breakers; and to a wide range of circuit breaker applications, such as, for example, residential, commercial, industrial, aircraft, and aerospace. As further non-limiting examples, AC (e.g., 110-120, 220, 480-600 VAC_{RMS}) operation including a wide range of frequencies (*e.g*., 50, 60, 120, 400 Hz) are possible.

While the exemplary microprocessor 11 is shown, the invention is applicable to a wide range of processors (*e.g*., without limitation, microcomputers; other microprocessor-based computers; central processing units (CPUs)).

The exemplary single rotary selector switch 51 reduces the manufacturing cost of the trip unit 9. This trip unit may be readily configured to provide combinations of both SDT 29 and GFT 55 time values for each position of that selector switch.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the invention which is to be given the full breadth of the claims appended and any and all equivalents thereof.

### REFERENCE CHARACTER LIST

- 1: electrical system
- 3A: phase A electrical circuit conductor
- 3B: phase B electrical circuit conductor
- 3C: phase C electrical circuit conductor
- 3N: neutral conductor
- 3G: ground conductor
- 5: circuit interrupter, microprocessor-based circuit breaker
- 7A: current transformer
- 7B: current transformer
- 7C: current transformer
- 7N: current transformer
- 9: electronic trip unit
- 9A: trip unit product style LSIG
- 9B: trip unit product style LSG
- 9C: trip unit product style LSI
- 9D: trip unit product style LS
- 10: trip signal
- 11: microprocessor (µP)
- 15: trip device
- 17A: separable contacts
- 17B: separable contacts
- 17C: separable contacts
- 19: current/time characteristic
- 21: first or lower portion
- 23: second or upper portion
- 25: first section
- 27: vertical line segment or short delay pick-up (SDPU)
- 29: short delay time (SDT)
- 31: dashed line
- 33: second section
- 35: vertical line segment or long delay pick-up (LDPU)
- 37: diagonal line segment
- 39: long delay time (LDT)
- 41: point
- 43: switches
- 45: rotary switch
- 47: rotary switch
- 49: rotary switch
- 51: rotary switch (TIME)
- 53: rotary switch
- 55: ground fault time (GFT)
- 57: vertical line segment or ground fault pick-up (GFPU)
- 59: current/time characteristic
- 61: dashed line
- 63: µP memory (M)
- 64: label
- 65: routine
- 66: switch read subroutine
- 67: step
- 69: step
- 71: step
- 73: step
- 75: step
- 77: rotary arm
- 79: resistor
- 81: positive voltage (+V)
- 83: position value
- 85: step
- 85A: table
- 85B: table
- 85C: table
- 85D: table
- 87: configuration value (CV)
- 88: step
- 89: step
- 91: main base
- 93: primary cover
- 95: secondary cover
- 97: operating handle
- 99: secondary escutcheon
- 101: aligned primary escutcheon
- 103: operating mechanism
- 105: line end
- 107: load end
- 109: removable trip unit
- 111: load terminal
- 113: right side accessory region or pocket
- 115: left side accessory pocket or region

## Claims

1. A trip unit for a circuit interrupter for an electrical circuit, said trip unit comprising:
a sensor adapted to sense a current flowing in said electrical circuit and to provide a signal representative of said current; and
a processor comprising a memory, a selector switch, and a routine evaluating said sensed current with respect to a plurality of predetermined current/time conditions and responsively generating a trip signal, said selector switch having a plurality of positions, with each of said positions selecting a first time value for a first one of said predetermined current/time conditions and selecting a second time value for a different second one of said predetermined current/time conditions.

2. The trip unit of Claim 1 wherein said trip unit includes a plurality of styles, with one of said styles including both said first one of said predetermined current/time conditions and said different second one of said predetermined current/time conditions; wherein the memory of said processor includes a configuration value; and wherein the routine of said processor reads the configuration value from said memory and responsively selects a corresponding one of said styles of said trip unit.

3. The trip unit of Claim 1 wherein said trip unit includes a plurality of styles, with one of said styles including both said first one of said predetermined current/time conditions and said different second one of said predetermined current/time conditions; and wherein the memory of said processor is preconfigured to include one of said styles of said trip unit.

4. The trip unit of Claim 3 wherein a count of said plurality of styles of said trip unit is four, with a first one of said styles including both said first one of said predetermined current/time conditions and said different second one of said predetermined current/time conditions, with a second one of said styles including said first one of said predetermined current/time conditions, with a third one of said styles including said different second one of said predetermined current/time conditions, and with a fourth one of said styles including none of said first one of said predetermined current/time conditions and none of said different second one of said predetermined current/time conditions.

5. The trip unit of Claim 4 wherein said routine ignores said selector switch for said fourth one of said styles, which includes none of said first one of said predetermined current/time conditions and none of said different second one of said predetermined current/time conditions.

6. The trip unit of Claim 1 wherein said processor is a microprocessor.

7. The trip unit of Claim 1 wherein said predetermined current/time conditions include at least long delay protection and override protection for said electrical circuit.

8. The trip unit of Claim 7 wherein said predetermined current/time conditions further include at least one of short delay protection and ground fault protection for said electrical circuit.

9. The trip unit of Claim 8 wherein said short delay protection includes a short delay time which is selected by said selector switch from the group comprising a first instantaneous time of about 50 milliseconds, a second time of about 120 milliseconds and a third time of about 300 milliseconds.

10. The trip unit of Claim 8 wherein said ground fault protection includes a ground fault time which is selected by said selector switch from the group comprising a first instantaneous time of about 50 milliseconds, a second time of about 120 milliseconds and a third time of about 300 milliseconds.

11. The trip unit of Claim 1 wherein said first one of said predetermined current/time conditions is a short delay protection function; wherein said different second one of said predetermined current/time conditions is a ground fault protection function; wherein said first time value is selected by said selector switch from a first plurality of short delay times; and wherein said second time value is selected by said selector switch from a second plurality of ground fault times.

12. The trip unit of Claim 11 wherein a count of said first plurality of short delay times equals a count of said second plurality of ground fault times.

13. A circuit breaker for an electrical circuit, said circuit breaker comprising:
at least one set of separable contacts;
an operating mechanism for moving said separable contacts between an open position and a closed position; and
a trip unit comprising:
a sensor adapted to sense a current flowing in said electrical circuit and to provide a signal representative of said current, and
a processor comprising a memory, a selector switch, and a routine evaluating said sensed current with respect to a plurality of predetermined current/time conditions and responsively generating a trip signal, said selector switch having a plurality of positions, with each of said positions selecting a first time value for a first one of said predetermined current/time conditions and selecting a second time value for a different second one of said predetermined current/time conditions.

14. The circuit breaker of Claim 13 wherein said predetermined current/time conditions include short delay protection and ground fault protection for said electrical circuit.

15. The circuit breaker of Claim 13 wherein said selector switch has a first count of said positions; wherein said first time value has a second count of possible time values; wherein said second time value has a third count of possible time values; and wherein said second count and said third count are both less than said first count.

16. The circuit breaker of Claim 15 wherein said second count equals said third count.

17. The circuit breaker of Claim 13 wherein said trip unit includes a plurality of styles; wherein the memory of said processor is preconfigured to include one of said styles of said trip unit; wherein said styles of said trip unit include one of a first style including both said first one of said predetermined current/time conditions and said different second one of said predetermined current/time conditions, a second style including said first one of said predetermined current/time conditions, a third style including said different second one of said predetermined current/time conditions, and a fourth style including none of said first one of said predetermined current/time conditions and none of said different second one of said predetermined current/time conditions.

18. A method of selecting a plurality of time values for a trip unit, said method comprising:
employing a trip unit including a plurality of predetermined current/time conditions;
employing a first time value for a first one of said predetermined current/time conditions;
employing a second time value for a different second one of said predetermined current/time conditions; and
employing a single selector switch having a plurality of positions, with each of said positions selecting the first time value and selecting the second time value.

19. The method of Claim 18 further comprising:
employing said trip unit including a plurality of styles;
employing one of said styles including both said first one of said predetermined current/time conditions and said different second one of said predetermined current/time conditions;
configuring a memory to include a configuration value representing a corresponding one of said styles of said trip unit; and
reading the configuration value from said memory and responsively selecting the corresponding one of said styles of said trip unit.

20. The method of Claim 18 further comprising:
employing said trip unit including a plurality of styles;
employing one of said styles including both said first one of said predetermined current/time conditions and said different second one of said predetermined current/time conditions;
configuring a memory to include only one of said styles of said trip unit; and
employing said only one of said styles including both said first one of said predetermined current/time conditions and said different second one of said predetermined current/time conditions.

21. The method of Claim 18 further comprising:
employing said trip unit including a count of four different styles of said trip unit;
employing a first one of said styles including both said first one of said predetermined current/time conditions and said different second one of said predetermined current/time conditions;
employing a second one of said styles including said first one of said predetermined current/time conditions;
employing a third one of said styles including said different second one of said predetermined current/time conditions; and
employing a fourth one of said styles including none of said first one of said predetermined current/time conditions and none of said different second one of said predetermined current/time conditions.

22. The method of Claim 21 further comprising:
ignoring said single selector switch for said fourth one of said styles, which includes none of said first one of said predetermined current/time conditions and none of said different second one of said predetermined current/time conditions.

23. The method of Claim 21 further comprising:
employing at least one of short delay protection and ground fault protection;
employing with said short delay protection a short delay time which is selected by said single selector switch from the group comprising a first time, a second time and a third time;
employing with said ground fault protection a ground fault time which is selected by said single selector switch from the group comprising a fourth time, a fifth time and a sixth time; and
employing said single selector switch having nine positions which correspond to the first time and the fourth time, the first time and the fifth time, the first time and the sixth time, the second time and the fourth time, the second time and the fifth time, the second time and the sixth time, the third time and the fourth time, the third time and the fifth time, and the third time and the sixth time.
